# EUROPEAN PATENT APPLICATION

(11) **EP 4 668 091 A1**
(43) Date of publication of application: **24.12.2025**
(21) Application number: 24778010.9
(22) Date of filing: 26.03.2024
(51) Int. Cl.: G06F 3/06

(54) **MEMORY DATA MIGRATION METHOD AND RELATED DEVICE**

(30) Priority: 31.03.2023 CN 202310363679
(71) Applicant: Huawei Technologies Co., Ltd., Shenzhen, Guangdong 518129 (CN)
(72) Inventor: YANG, Rui, Shenzhen, Guangdong 518129 (CN); YANG, Junwei, Shenzhen, Guangdong 518129 (CN); LUO, Xingyu, Shenzhen, Guangdong 518129 (CN); ZHU, Xiaoping, Shenzhen, Guangdong 518129 (CN)
(74) Representative: Grünecker Patent- und Rechtsanwälte PartG mbB
(86) International application number: PCT/CN2024/083821
(87) International publication number: WO 2024/199222

(57) **Abstract**

A method for migrating memory data and a related device are disclosed, and relate to the computer field. The method includes: in a scenario in which a processor in a computer device accesses memory media in an interleaving manner, sampling a plurality of memory channels according to a sampling strategy; determining, based on access frequencies of interleaved data blocks in sampled memory channels, access frequencies of pages in which the interleaved data blocks are located in the memory media, to determine access temperatures of the pages based on the access frequencies of the pages; and triggering data migration based on the access temperatures. All access frequencies of the pages are determined based on some access frequencies of the pages. This improves accuracy of the access frequencies of the pages in which the interleaved data blocks are located, and reduces an amount of statistical data of the access frequencies of the pages, so that the processor can obtain the access frequencies of the pages as quickly as possible, and when data migration is triggered based on the access temperatures of the pages, a data processing speed of a system is improved, and a data processing delay is reduced.

## Description

This application claims priority to Chinese Patent Application No. 202310363679.X, filed with the China National Intellectual Property Administration on March 31, 2023 and entitled "METHOD FOR MIGRATING MEMORY DATA AND RELATED DEVICE", which is incorporated herein by reference in its entirety.

### TECHNICAL FIELD

This application relates to the computer field, and in particular, to a method and an apparatus for migrating memory data, a memory, a chip, a processor, a computer device, and a computer-readable storage medium.

### BACKGROUND

Currently, a processor in a computer device performs read operations or write operations on memories in an interleaving manner. That is, accessed data in the memories is evenly distributed on a plurality of memory channels based on unit storage space (for example, cache lines (cache line)), for read operations or write operations on a plurality of memories. This improves access performance of a system. However, in an application scenario in which the processor accesses the memories in the interleaving manner, access temperatures of the memories are determined based on access frequencies of pages. A large quantity of counters are needed to collect statistics on access frequencies of pages for each memory channel, resulting in a significant amount of statistical data on the access frequencies of the pages. This is especially severe for small pages (for example, 4-kilobyte (Kilobyte, KB) pages). Therefore, the processor may not be able to obtain the access frequencies of the pages in time. Consequently, a storage with a high access speed may store infrequently accessed data, or a storage with a low access speed may store frequently accessed data, affecting a data processing speed and a delay of the system.

### SUMMARY

This application provides a method and an apparatus for migrating memory data, a memory, a chip, a processor, a computer device, and a computer-readable storage medium. This improves a data processing speed of a system and reduces a data processing delay.

According to a first aspect, a method for migrating memory data is provided, where the method is applied to a hybrid memory system, the hybrid memory system includes a plurality of processors and a plurality of memory media of different types, and the processor is associated with at least two memory media of different types. The method includes: in a scenario in which a processor in a computer device accesses memory media in an interleaving manner, sampling a plurality of memory channels according to a sampling strategy; determining, based on access frequencies of interleaved data blocks in sampled memory channels, access frequencies of pages in which the interleaved data blocks are located in the memory media, to determine access temperatures of the pages based on the access frequencies of the pages; and triggering data migration based on the access temperatures. The access frequency intuitively indicates how frequently a data block is accessed by an application. A larger quantity of times that the data block is accessed by the application indicates that the data block is accessed more frequently by the application, and an access temperature of the data block is higher. A smaller quantity of times that the data block is accessed by the application indicates that the data block is accessed less frequently, and an access temperature of the data block is lower.

In this way, in the method for migrating memory data provided in this application, multi-dimensional sampling is performed on the memory channels based on a space dimension and a time dimension that are indicated by the sampling strategy, to ensure that the access frequencies of the interleaved data blocks in the sampled memory channels are representative, and the access frequencies of the pages in which the interleaved data blocks are located are determined based on the access frequencies of the interleaved data blocks in the sampled memory channels, that is, all access frequencies of the pages are determined based on some access frequencies of the pages. This improves accuracy of the access frequencies of the pages in which the interleaved data blocks are located, and reduces an amount of statistical data of the access frequencies of the pages, so that the processor can obtain the access frequencies of the pages as quickly as possible. When data migration is triggered based on the access temperatures of the pages, hot data may be migrated to a near memory (near memory), and cold data may be migrated to a far memory (far memory), so that the processor can obtain frequently accessed data from the near memory as quickly as possible, to improve a data processing speed of the system and reduce a data processing delay.

An access speed of the near memory is greater than an access speed of the far memory. For example, the near memory may be a dynamic random access memory (Dynamic Random Access Memory, DRAM) or a double data rate synchronous dynamic random access memory (double data rate SDRAM, DDR SDRAM). The far memory can be a storage class memory (storage class memory, SCM).

The plurality of memory media of different types include a first memory medium and a second memory medium, the memory media associated with the processor include the first memory medium and the second memory medium, an access speed of the first memory medium is greater than an access speed of the second memory medium, and an access delay of the first memory medium is less than an access delay of the second memory medium. For example, the first memory medium may be a near memory, and the second storage medium may be a far memory.

In a possible implementation, sampling the plurality of memory channels in the computer device according to the sampling strategy includes: sampling the plurality of memory channels based on page identifiers indicated by the sampling strategy and spatial distribution of the memory channels, to obtain the sampled memory channels.

In a possible implementation, sampling the plurality of memory channels based on the page identifiers indicated by the sampling strategy and the spatial distribution of the memory channels, to obtain the sampled memory channels includes: sampling the plurality of memory channels based on a correspondence between the page identifiers and the memory channels, to obtain the sampled memory channels.

In this way, spatial sampling is performed on the memory channels based on the pages and spatial distribution characteristics of the memory channels; and an access frequency of a part of storage space in the page represent all access frequencies of the page, that is, an access frequency recorded by a counter in one memory channel represents an access frequency of one page. This improves accuracy of the access frequencies of the pages on which the interleaved data blocks are located, and reduces an amount of statistical data of the access frequencies of the pages.

In a possible implementation, sampling the plurality of memory channels in the computer device according to the sampling strategy includes: sampling the plurality of memory channels in a rotational sampling manner indicated by the sampling strategy, to obtain the sampled memory channels, where the rotational sampling manner indicates a change manner of a correspondence between a page identifier and a memory channel.

In this way, the memory channels are sampled based on a space dimension and a time dimension, and the correspondence between a page identifier and a memory channel is changed in the rotational sampling manner, making the access frequencies of the interleaved data blocks in the sampled memory channels more representative, and reducing distortion impact caused by sampling.

In a possible implementation, sampling the plurality of memory channels in the computer device according to the sampling strategy includes: sampling the plurality of memory channels based on a correspondence between a time period indicated by the sampling strategy and storage space of the memory medium, to obtain the sampled memory channels.

In a possible implementation, sampling the plurality of memory channels in the computer device according to the sampling strategy includes: sampling the plurality of memory channels in a rotational sampling manner indicated by the sampling strategy, to obtain the sampled memory channels, where the rotational sampling manner indicates a change manner of the correspondence between the time period and the storage space of the memory medium.

In this way, the memory channels are sampled based on a space dimension and a time dimension, and the correspondence between the time period and the storage space of the memory medium is changed in the rotational sampling manner, making the access frequencies of the interleaved data blocks in the sampled memory channels more representative, and reducing distortion impact caused by sampling.

In a possible implementation, sampling the plurality of memory channels in the computer device according to the sampling strategy includes: sampling, according to the sampling strategy, a plurality of memory channels corresponding to addresses indicated by access requests, where the access request indicates an operation performed by an application run by the processor in the computer device on the memory medium.

In a possible implementation, a size of the interleaved data block is a multiple of a size of a cache line of accessing the memory medium by the processor.

In a possible implementation, a size of the page is 4 kilobytes (Kilobyte, KB). According to the method for migrating memory data provided in this application, accuracy of the access frequencies of the pages in which the interleaved data blocks are located can be improved, and an amount of statistical data of the access frequencies of the pages is reduced, so that the processor can obtain the access frequencies of the pages as quickly as possible. For a smaller page, this not only reduces an amount of statistical data of an access frequency of the small page, but also improves statistical accuracy, thereby obtaining higher data migration precision.

According to a second aspect, an apparatus for migrating memory data is provided, where the apparatus for migrating memory data includes modules configured to perform the method for migrating memory data according to the first aspect or any one of the possible designs of the first aspect.

According to a third aspect, a memory is provided, where the memory includes a storage medium and a controller, and the storage medium is configured to store a group of computer instructions; and when executing the group of computer instructions, the controller performs an operation step of the method according to the first aspect or any one of the possible implementations of the first aspect, to identify an access frequency at which a data block in the memory is accessed by an application.

According to a fourth aspect, a chip is provided, including a processor and a power supply circuit, where the power supply circuit is configured to supply power to the processor, and the processor is configured to perform an operation step of the method according to the first aspect or any one of the possible implementations of the first aspect, to identify an access frequency at which a data block in a memory is accessed by an application.

According to a fifth aspect, a processor is provided, where the processor is associated with at least two memory media of different types, and the processor is configured to perform an operation step of the method according to the first aspect or any one of the possible implementations of the first aspect, to identify an access frequency at which a data block in the memory media is accessed by an application.

According to a sixth aspect, a computer device is provided, where the computer device includes a storage, a plurality of memory media of different types, and a processor, and the storage is configured to store a group of computer instructions; and when the processor executes the group of computer instructions, the processor is configured to perform an operation step of the method according to the first aspect or any one of the possible implementations of the first aspect, to identify an access frequency at which a data block in the memory is accessed by an application.

According to a seventh aspect, a computer-readable storage medium is provided, including computer software instructions, where when the computer software instructions are run in a processor, the processor is caused to perform an operation step of the method according to the first aspect or any one of the possible implementations of the first aspect.

According to an eighth aspect, a computer program product is provided, where when the computer program product runs on a computer, the computer is caused to perform an operation step of the method according to the first aspect or any one of the possible implementations of the first aspect.

For technical effects brought by any design in the second aspect to the eighth aspect, refer to technical effects brought by the first aspect or different designs in the first aspect. Details are not described herein again.

Based on the implementations provided in the foregoing aspects, this application may further combine technologies in this application to provide more implementations.

### BRIEF DESCRIPTION OF DRAWINGS

FIG. 1 is a diagram of composition of a computer device according to this application;
FIG. 2 is a diagram of memory interleaving according to this application;
FIG. 3 is a diagram of a scenario of collecting statistics on access temperatures of memories according to this application;
FIG. 4 is a schematic flowchart of a method for migrating memory data according to this application;
FIG. 5 is a diagram of collecting statistics on access temperatures of memories based on a space dimension according to this application;
FIG. 6 is a diagram of collecting statistics on access temperatures of memories based on a time dimension according to this application;
FIG. 7 is a schematic flowchart of a method for collecting statistics on access temperatures of memories according to this application;
FIG. 8 is a schematic flowchart of a sampling strategy adjustment method according to this application; and
FIG. 9 is a diagram of a structure of an apparatus for migrating memory data according to this application.

### DESCRIPTION OF EMBODIMENTS

For ease of description, the terms in this application are first briefly described.

In a hierarchy of a computer storage system, a storage closer to a processor has a higher access speed and a smaller storage capacity. Storages are classified into a register, a cache, a main memory, and an external memory in ascending order of distances to the processor.

**A main memory (main memory)** is also referred to as an internal memory, and briefly, a primary memory or a memory (memory). The main memory is an important component of a computer system, that is, a bridge for communication between an external memory and a processor. The main memory is configured to temporarily store operation data in the processor and data exchanged between the processor and the external memory like a hard disk drive. For example, a computer starts to run, and loads data that needs to be operated from a main memory to a processor for operation. After the operation is completed, the processor stores an operation result in the main memory. For example, the main memory includes a dynamic random access memory (dynamic random access memory, DRAM) and a double data rate synchronous dynamic random access memory (double data rate synchronous DRAM, DDR SDRAM).

**An external memory** is also referred to as a secondary memory, and briefly, an external memory or a secondary memory. The external memory has a larger storage capacity and a lower access speed than a main memory. For example, the external memory includes a network memory, a solid state driver (solid state disk or solid state drive, SSD), and a hard disk drive (hard disk drive, HDD).

**A cache (cache)** is a high-speed and small-capacity memory between a processor and a main memory. The cache is briefly referred to as a cache. The cache has a smaller storage capacity and a higher access speed than the main memory. The cache includes a level 1 cache (L1 cache), a level 2 cache (L2 cache), and a level 3 cache (L3 cache). The level 1 cache is disposed inside a processor core. The level 2 cache may be disposed inside or outside the processor core. The level 1 cache and the level 2 cache are usually exclusive (exclusive) to the processor core on which the level 1 cache and level 2 cache are located. The level 3 cache is usually disposed outside the processor core and is shared (shared) by a plurality of processor cores.

**A register (register)** is a small memory located inside a processor, and is configured to temporarily store data included an operation and an operation result. The register may be a common sequential logic circuit.

**A hierarchical storage technology (Hierarchical Storage Technology)** is used to store data respectively in storage devices with different performance in different manners based on indicators such as data importance, an access frequency, retention time, a storage capacity, and performance. The hierarchical storage technology implements automatic migration of data between the storage devices.

**Hot data** is data that is frequently accessed by a processor. If the hot data is stored in a near memory (near memory), the processor can obtain the data as quickly as possible. This improves a data processing speed of a system, reduces a data processing delay, and significantly improves access performance of the system.

**Cold data** is data that is not frequently accessed by a processor. If the cold data is stored in a far memory (far memory), more data can be stored, and more hot data can be stored in a near memory. This improves resource utilization of the near memory and reduces system costs. An access speed of the near memory is greater than an access speed of the far memory. For example, a cache is a near memory relative to a main memory, and the main memory is a far memory. For another example, a main memory is a near memory relative to an external memory, and the external memory is a far memory.

**A cache line (cache line)** is a unit used by a computer device to perform a read operation or a write operation on storage space of a memory. A size of one cache line may be 64 bytes (byte, B).

**A page** is a unit used by a computer device to manage storage space of a memory. For example, a page size (page size) is 4 KB, 2 megabytes (Megabyte, MB), or another byte size. A 4 KB page may be referred to as a small page. A 2 MB page may be referred to as a large page. A smaller page indicates more resources required by the computer device to manage the memory, and a larger page indicates less resources required by the computer device to manage the memory. One page may include a plurality of cache lines, that is, a page size is a multiple of a size of a cache line.

**Interleaving** refers to evenly distributing accessed data in a memory across a plurality of memory channels based on unit storage space (for example, cache lines). An interleaving manner may be configured by a system administrator. Interleaving may be performed between a plurality of memory channels connected in one processor, or interleaving may be performed between a plurality of memory channels in a plurality of processors.

**A memory channel** refers to a plurality of memories connected in a processor in a computer device. The processor may perform an operation on a memory by using an interleaving technology. For example, the processor evenly distributes, across a plurality of memory channels based on a size of a cache line, data to be written into the memory. Further, the processor reads the data from the plurality of memory channels based on the size of the cache line. In this way, data processing is performed based on the plurality of memory channels, to improve memory bandwidth utilization and processing performance of the computer device.

To improve a data processing speed and reduce a data processing delay of a system, this application provides a method for migrating memory data, where the method is applied to a hybrid memory system, the hybrid memory system includes a plurality of processors and a plurality of memory media of different types, and the processor is associated with at least two memory media of different types. The method includes: in a scenario in which a processor in a computer device accesses memory media in an interleaving manner, sampling a plurality of memory channels according to a sampling strategy; determining, based on access frequencies of interleaved data blocks in sampled memory channels, access frequencies of pages in which the interleaved data blocks are located in the memory media, to determine access temperatures of the pages based on the access frequencies of the pages; and triggering data migration based on the access temperatures.

In the method for migrating memory data provided in this application, multi-dimensional sampling is performed on the memory channels based on a space dimension and a time dimension that are indicated by the sampling strategy, to ensure that the access frequencies of the interleaved data blocks in the sampled memory channels are representative, and the access frequencies of the pages in which the interleaved data blocks are located are determined based on the access frequencies of the interleaved data blocks in the sampled memory channels, that is, all access frequencies of the pages are determined based on some access frequencies of the pages. This improves accuracy of the access frequencies of the pages in which the interleaved data blocks are located, and reduces an amount of statistical data of the access frequencies of the pages, so that the processor can obtain the access frequencies of the pages as quickly as possible. When data migration is triggered based on the access temperatures of the pages, hot data may be migrated to a near memory, and cold data may be migrated to a far memory, so that the processor can obtain frequently accessed data from the near memory as quickly as possible, to improve the data processing speed of the system and reduce the data processing delay.

The method for migrating memory data provided in this application may be applied to fields such as artificial intelligence, big data, and cloud computing, and a scenario including a plurality of types of storage media, such as a high-performance and large-capacity storage system.

The following describes the implementations of this application in detail with reference to the accompanying drawings.

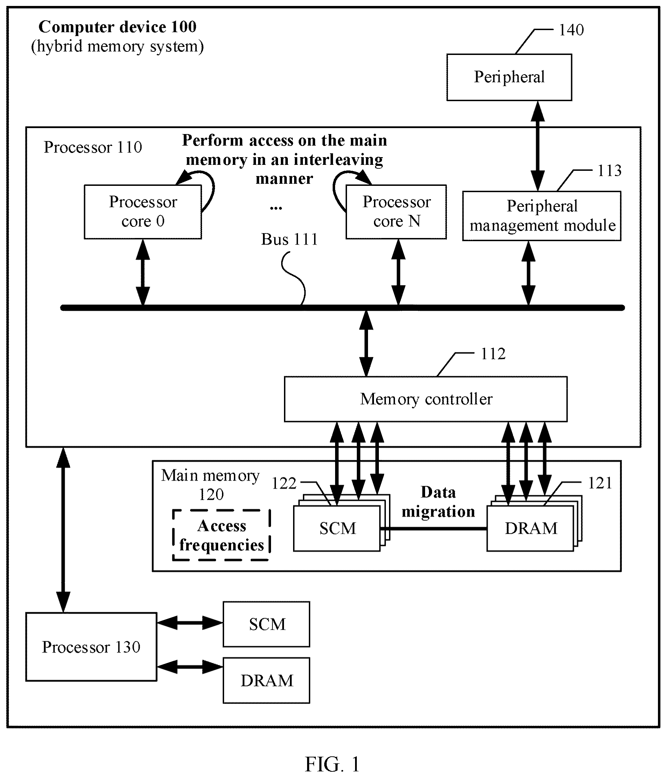

FIG. 1 is a diagram of composition of a computer device according to this application. As shown in FIG. 1, the computer device 100 includes a processor 110.

The processor 110 is a control center of the computer device 100. The processor 110 may be a computing unit with a computing capability, such as a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU). The processor 110 may alternatively be another general-purpose processor, a digital signal processor (digital signal processor, DSP), an application-specific integrated circuit (application-specific integrated circuit, ASIC), a field-programmable gate array (field-programmable gate array, FPGA), a system on chip (system on chip, SoC) or another programmable logic device, a discrete gate or transistor logic device, a discrete hardware component, or the like. The general-purpose processor may be a microprocessor, any conventional processor, or the like. For ease of description, in the following embodiments, an example in which the processor 110 is a CPU is used for description.

The computer device 100 in FIG. 1 may include one or more processors (for example, the processor 110 and a processor 130). The processor may be a multi-core (multi-core) processor, that is, the processor includes one processor core (core) or a plurality of processor cores. For example, the processor 110 shown in FIG. 1 includes N processor cores. The processor herein may be one or more devices, circuits, and/or computing units configured to process data (for example, computer program instructions).

Because a quantity of cores of a single processor gradually increases, and a computing speed of the processor also continuously increases, requirements of the processor for a memory access speed and a memory capacity is increasingly high. In a possible implementation, a plurality of storage media of different types are used together as a main memory (memory or main memory for short) of the computer device, to increase a memory capacity, and as many memory resources and memory bandwidths as possible are allocated from the memory to each processor core, to meet the requirements of the processor for the memory access speed and the memory capacity. A system that uses the plurality of storage media of different types as the memory may be referred to as a hybrid memory system. The storage media used as a memory in the hybrid memory system may be referred to as memory media. The processor may be associated with at least one type of memory medium. To be specific, some processors are associated with one type of memory medium, and some processors are associated with more than two types of memory media.

For example, the computer device includes a plurality of memory media of different types. The plurality of memory media of different types include a first memory medium and a second memory medium. A storage capacity of the first memory medium is lower than that of the second memory medium, an access speed of the first memory medium is higher than that of the second memory medium, an access delay of the first memory medium is lower than that of the second memory medium, and costs of the first memory medium are higher than that of the second memory medium.

The first memory medium may include a dynamic random access memory (dynamic random access memory, DRAM). The second memory medium is a storage class memory (storage class memory, SCM), and the SCM includes at least one of a phase-change memory (phase-change memory, PCM), a magnetic random access memory (magnetoresistive random access memory, MRAM), a resistive random access memory (resistive random access memory, RRAM/ReRAM), a ferroelectric random access memory (ferroelectric random access memory, FRAM), a fast NAND (fast NAND), or a nano random access memory (Nano-RAM, NRAM).

For example, a plurality of memory media of different types that are used as a main memory 120 in the computer device 100 include a DRAM 121 and an SCM 122. The processor 110 is connected to the DRAM 121 and the SCM 122 through an interface that supports memory semantics.

The processor 110 is configured to: run an application to perform a read operation or a write operation on a memory medium (for example, a DRAM 121 or an SCM 122), and trigger data migration based on access coldness or hotness of the memory medium.

Triggering data migration based on the access coldness or hotness of the memory medium may be replaced with triggering data migration based on access coldness or hotness of data stored in the memory medium. Data migration includes migrating cold data to a next-level memory medium, and migrating hot data to a previous-level memory medium.

For example, when a cache line is cold data, a memory medium in which the cache line is located is a DRAM. In this case, the cache line is migrated to an SCM.

For another example, when a cache line is hot data, a memory medium in which the cache line is located is an SCM. In this case, the cache line is migrated to a DRAM.

It may be understood that, for any level of memory medium in the computer device, data migration may be triggered based on access coldness or hotness of data. For each memory medium, data is migrated level by level based on the access coldness or hotness of the data. Compared with a current memory medium, a next-level memory medium has a larger storage capacity, and a previous-level memory medium has a higher access speed.

In some embodiments, the computer device collects statistics on access frequencies of pages at a granularity of a page (for example, a 4 KB page or a 2 MB page), which is compatible with a memory page management manner of the computer device. Therefore, the method for migrating memory data is easy to use. For example, the processor performs an operation on the memory medium at a granularity of a cache line, and the cache line belongs to a managed page. In this case, when a cache line in the memory medium is operated once, a page to which the cache line belongs is also read and written once. The controller collects statistics on an access frequency of the page to which the operated cache line belongs, so that accuracy of identifying an access temperature of the page is effectively improved.

In some other embodiments, when the application run by the processor 110 performs operations on memory media in the computer device in an interleaving manner, accessed data in the memory media is evenly distributed across a plurality of memory channels based on unit storage space (for example, cache lines), to improve an access speed. On each memory channel, only a part of space addresses in a single page can be obtained. In this case, access frequencies of pages include access frequencies of interleaved data blocks included in the pages across the plurality of memory channels.

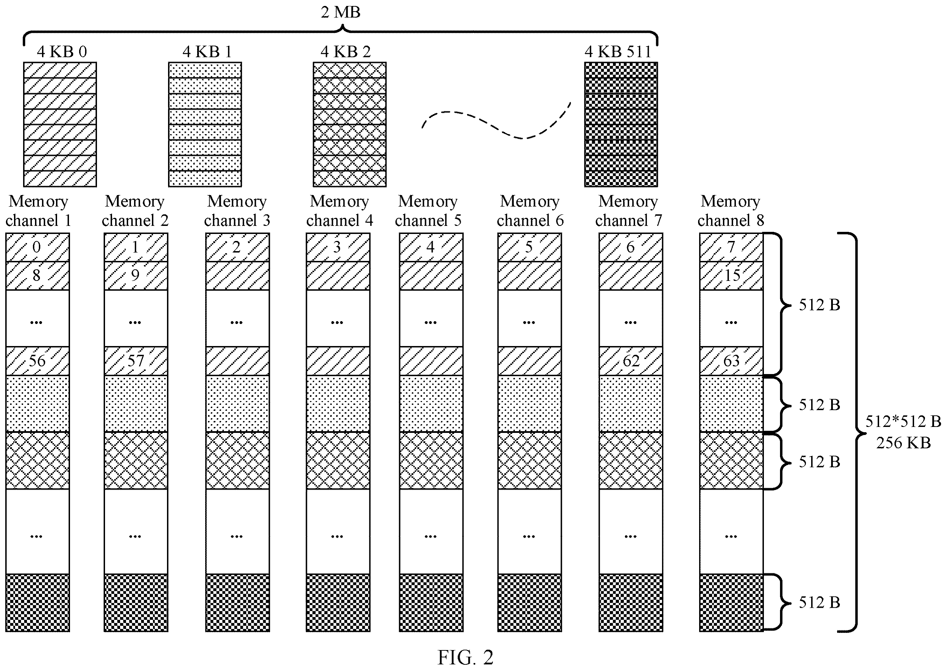

For example, as shown in FIG. 2, a 2 MB page includes 512*4 KB pages, a size of a cache line is 64 B, and a 4 KB page includes 64 cache lines. The 2 MB page includes 512*64 cache lines evenly distributed across fewer than eight memory channels. Each memory channel is allocated with 512*512 B of cache lines. Each memory channel includes 256 KB of interleaved data blocks.

For example, a page size is 4 KB (X^{page size}=4 KB), and data is interleaved across eight memory channels at a granularity of cache lines (N^{channel}=8). In this case, a size of an interleaved data block in each memory channel is 512 B. If a storage capacity of a memory is 128 GB, 32K counters are needed in the absence of interleaving, but 32K*8=256K counters are needed in the presence of interleaving across the eight memory channels.

For another example, a page size is 2 MB (X^{page size}=2 MB), and data is interleaved across four memory channels at a granularity of cache lines (N^{channel}=4). In this case, a size of an interleaved data block in each memory channel is 512 KB. If a storage capacity of a memory is 128 GB, 64K counters are needed in the absence of interleaving, but 64K*4=256K counters are needed in the presence of interleaving across the four memory channels.

In this application, the processor 110 is configured to: in a scenario in which memory media are accessed in an interleaving manner, sample a plurality of memory channels according to a sampling strategy; determine, based on access frequencies of interleaved data blocks in sampled memory channels, access frequencies of pages in which the interleaved data blocks are located in the memory media, to determine access temperatures of the pages based on the access frequencies of the pages; and trigger data migration based on the access temperatures.

In addition, a body for executing statistics collection on an access temperature of a memory is not limited in this application. The execution body includes a medium module in the computer device, a hardware module having a computing function in the computer device, or a processor.

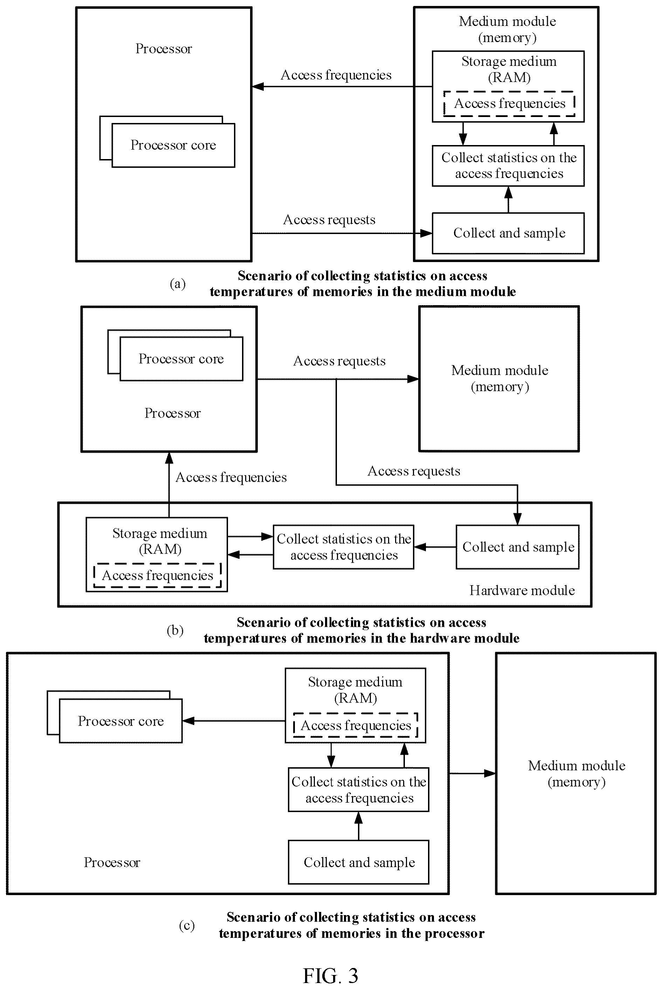

For example, as shown in (a) in FIG. 3, access request collection, memory channel sampling, statistics collection and counting, and access frequency storage are implemented in the medium module. The medium module may be any one of the plurality of memory media of different types. For example, the medium module may be a DRAM or an SCM.

The processor in the computer device sends access requests to the medium module, to indicate to perform a write operation or a read operation on the medium module. A controller (for example, a register clock driver (Register Clock Driver, RCD)) in the medium module may collect the access requests, sample memory channels that the access requests indicate to access, collect statistics on access frequencies of interleaved data blocks in sampled memory channels, store the access frequencies of the interleaved data blocks, and further feeds back the access frequencies of the interleaved data blocks to the processor in an in-band or out-of-band manner.

(b) in FIG. 3 is different from (a) in FIG. 3 as follows: Another hardware module in the computer device implements access request collection, memory channel sampling, statistics collection and counting, access frequency storage, and feeding back access frequencies of interleaved data blocks to the processor in an in-band or out-of-band manner. The hardware module may be a memory controller or a peripheral (for example, a complex programmable logic device (complex programmable logic device, CPLD), or an FPGA).

(c) in FIG. 3 is different from (a) in FIG. 3 as follows: The processor in the computer device implements access request collection, memory channel sampling, statistics collection and counting, and access frequency storage, and a processor core may obtain access frequencies of interleaved data blocks by reading a register in the processor.

The computer device 100 may further include a cache and a register.

The cache is configured to store instructions or data that may be accessed by the processor core in the processor 110 a plurality of times. This improves a data processing speed of the processor, and prevents the processor from frequently accessing the main memory 120.

In a physical form, the cache may be a random access memory (random access memory, RAM), a static random access memory (static random access memory, SRAM), or a dynamic random access memory (dynamic RAM, DRAM), or another type of storage device that may store information and instructions.

In a logical form, the cache may be a level 1 cache (L1 cache), a level 2 cache (L2 cache), a level 3 cache (L3 cache), or a cache device of any level. For example, caches disposed inside the processor core may be a level 1 cache (L1 cache) and a level 2 cache (L2 cache). A cache disposed outside the processor core may be a level 3 cache (L3 cache).

The register is configured to store instructions or data that may be accessed by the processor core in the processor 110 a plurality of times. Because an access speed of the register is higher than that of the cache, the instructions or data that may be accessed by the processor core a plurality of times may be first stored in the register, so that the data processing speed of the processor can be further improved.

The processor core is connected to another component (for example, a processor core, a cache, or the main memory 120) in the processor through a bus 111, and accesses the another component through the bus 111. For example, the access frequency is transmitted between the processor core, the cache, and the main memory 120 through the bus 111. For another example, the processor core transmits a write instruction or a read instruction to the main memory 120 through the bus 111, so that the main memory 120 performs a write operation on the cache line according to the write instruction or performs a read operation on the cache line according to the read instruction. The bus 111 may be an industry standard architecture (industry standard architecture, ISA) bus, a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), a private bus standard of a non-standard system, or the like. The bus may be classified into an address bus, a data bus, a control bus, and the like. For ease of representation, only one bold line is used for representation in FIG. 1, but it does not represent that there is only one bus or one type of bus.

A connection manner between the processor core and the another component in the processor in FIG. 1 is merely an example for description. In a possible implementation, the processor core is connected to the another component in the processor through a ring bus (ring bus), and accesses the another component in the processor through the ring bus. In another possible implementation, the processor core is connected to the another component in the processor through a mesh bus (mesh bus), and the processor core accesses the another component in the processor through the mesh bus.

The processor 110 is connected to the main memory 120 by using a memory controller (memory controller, MC) 112. The processor 110 may perform various functions of the computer device 100 by running or executing software programs stored in the main memory 120, and invoking data stored in the main memory 120. For example, the processor 110 collects access requests, samples memory channels, collects statistics, and stores access frequencies by using the memory controller 112.

The main memory 120 may be a read-only memory (read-only memory, ROM), another type of static storage device that can store static information and instructions, a random access memory (random access memory, RAM), another type of dynamic storage device that can store information and instructions, an electrically erasable programmable read-only memory (electrically erasable programmable read-only memory, EEPROM), or the like. The main memory 120 is further configured to store a program related to this embodiment.

The processor 110 may further include a peripheral (external device) 140 and a peripheral management module 113. The peripheral 140 is connected to the peripheral management module 113 through the bus 111. The peripheral 140 may be an application-specific integrated circuit (application-specific integrated circuit, ASIC), for example, a microprocessor (digital signal processor, DSP), or one or more field programmable gate arrays (field programmable gate array, FPGA), or a graphics processing unit (graphics processing unit, GPU), or a neural-network processing unit (neural-network processing unit, NPU). The peripheral 140 may also collect access requests, sample memory channels, count statistics, store access frequencies, and feed back the access frequencies to the processor core through the bus 111, so that the processor core triggers data migration based on access coldness or hotness of data.

A structure of the device shown in FIG. 1 does not constitute a limitation on the computer device. The computer device may include components more or fewer than those shown in the figure, or a combination of some components, or a different component layout.

The following describes, in detail with reference to the accompanying drawings, the method for migrating memory data provided in this application.

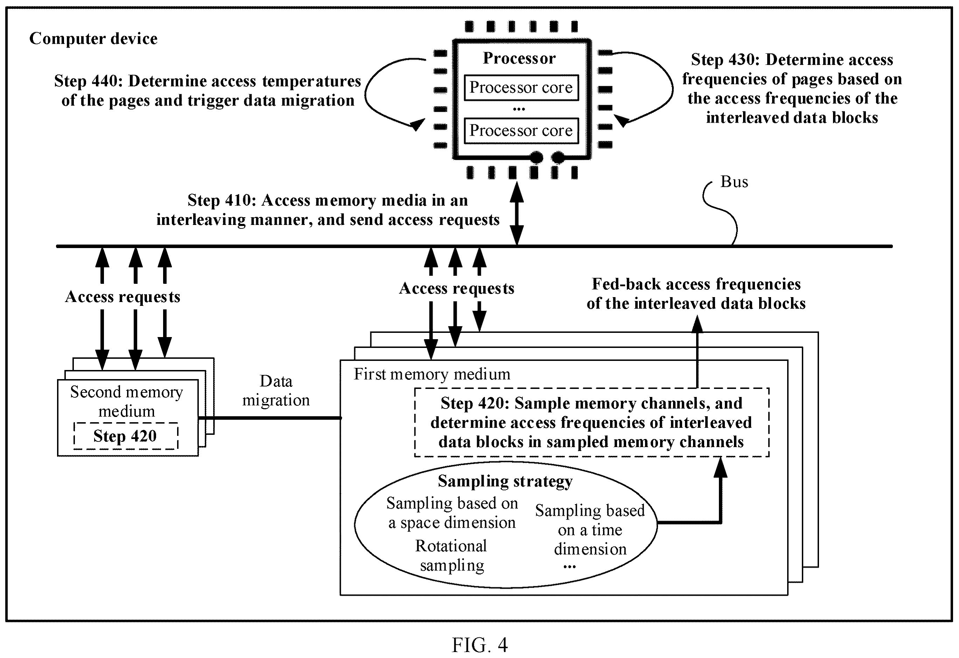

For ease of description, a scenario of statistics collection in the medium module shown in (a) in FIG. 3 is used as an example for description, that is, an example is used for description in which access request collection, memory channel sampling, statistics collection and counting, and access frequency storage are implemented in the memory medium. FIG. 4 is a schematic flowchart of a method for migrating memory data according to this application. As shown in FIG. 4, the method includes the following steps.

**Step 410: The processor accesses memory media in an interleaving manner, and sends access requests to a plurality of memory media.**

When accessing the memory media in the interleaving manner, the processor evenly distributes accessed data in the memory media across a plurality of memory channels based on unit storage space (for example, cache lines). It should be understood that evenly distributing the accessed data in the memory media across the plurality of memory channels based on unit storage space means evenly distributing the accessed data in the memory media across the plurality of memory media based on unit storage space. For example, the processor sends the access requests to the plurality of memory media, where the access request indicates to perform a read operation or a write operation on the memory medium based on unit storage space (for example, a cache line). A size of unit storage space may be a size of a cache line in the memory accessed by the processor.

**Step 420: The memory medium samples a plurality of memory channels in the computer device according to a sampling strategy, and determines access frequencies of interleaved data blocks in sampled memory channels.**

The memory medium receives the access request sent by the processor. The access request indicates an operation performed by an application run by the processor on the memory medium in the computer device. The memory medium decodes the access request, to obtain a physical address and an operation instruction that are indicated by the access request.

When the processor accesses the plurality of memory media in the interleaving manner, the physical address indicates storage space of a single memory channel in the plurality of memory channels. A size of the storage space may be a size of one or more cache lines, that is, a size of an interleaved data block is a multiple of a size of a cache line of accessing the memory medium by the processor. The operation instruction instructs to perform a read operation or a write operation on the storage space.

It may be understood that, when the processor accesses the plurality of memory media in the interleaving manner, it is determined that a same page is accessed in all of the plurality of memory media. To reduce an amount of statistical data of an access frequency of the page, the memory medium samples the plurality of memory channels according to the sampling strategy, and collects statistics on the access frequencies of the interleaved data blocks in the sampled memory channels. The sampling strategy indicates to sample the memory channels based on a space dimension and a time dimension.

The following describes a manner in which the memory medium samples the plurality of memory channels.

Manner 1: The memory samples the plurality of memory channels based on page identifiers indicated by the sampling strategy and spatial distribution of the memory channels, to obtain the sampled memory channels. When the processor accesses the plurality of memory media in the interleaving manner, access frequencies of accessed storage space in the plurality of memory media are similar, and the accessed storage space in the plurality of memory media belongs to different address segments of a same page. Therefore, according to the rule, a correspondence between a page identifier and a memory channel may be pre-configured.

In some embodiments, the memory medium receives the access request, and determines, based on a physical address indicated by the access request, a page accessed by the processor and an address segment indicated by the physical address in the page. The memory medium determines, based on the correspondence between a page identifier and a memory channel, a memory channel corresponding to the accessed page; and determines whether a memory channel for receiving the access request is the same as the memory channel corresponding to the accessed page. If the memory channels are the same, the memory medium collects statistics on access frequencies of interleaved data blocks in the memory channel for receiving the access request. If the memory channels are different, there is no need to collect statistics on access frequencies of interleaved data blocks in the memory channel for receiving the access request. In this way, the sampled memory channels are obtained by sampling the plurality of memory channels, and statistics on the access frequencies of the interleaved data blocks in the sampled memory channels are collected.

For example, the correspondence between a page identifier and a memory channel indicates that there is a correspondence when a page identifier is the same as an identifier of a memory channel, in other words, statistics on access frequencies of interleaved data blocks are collected in the memory channel whose identifier is the same as the page identifier. For example, a page 0 corresponds to a memory channel 0, and statistics on access frequencies of interleaved data blocks in the page 0 are collected in the memory channel 0. A page 1 corresponds to a memory channel 1, and statistics on access frequencies of interleaved data blocks in the page 1 are collected in the memory channel 1. For example, the memory channel 0 receives the access request. If it is determined, based on the physical address indicated by the access request, that the processor accesses the page 0, statistics on the access frequencies of the interleaved data blocks in the page 0 are collected in the memory channel 0; or if it is determined, based on the physical address indicated by the access request, that the processor accesses the page 1, statistics on the access frequencies of the interleaved data blocks in the page 1 does not need to be collected in the memory channel 0. For example, the memory channel 1 receives the access request. If it is determined, based on the physical address indicated by the access request, that the processor accesses the page 0, statistics on the access frequencies of the interleaved data blocks in the page 0 does not need to be collected in the memory channel 1.

For another example, the correspondence between a page identifier and a memory channel indicates that there is a correspondence with a memory channel that has a same operation result as a page identifier.

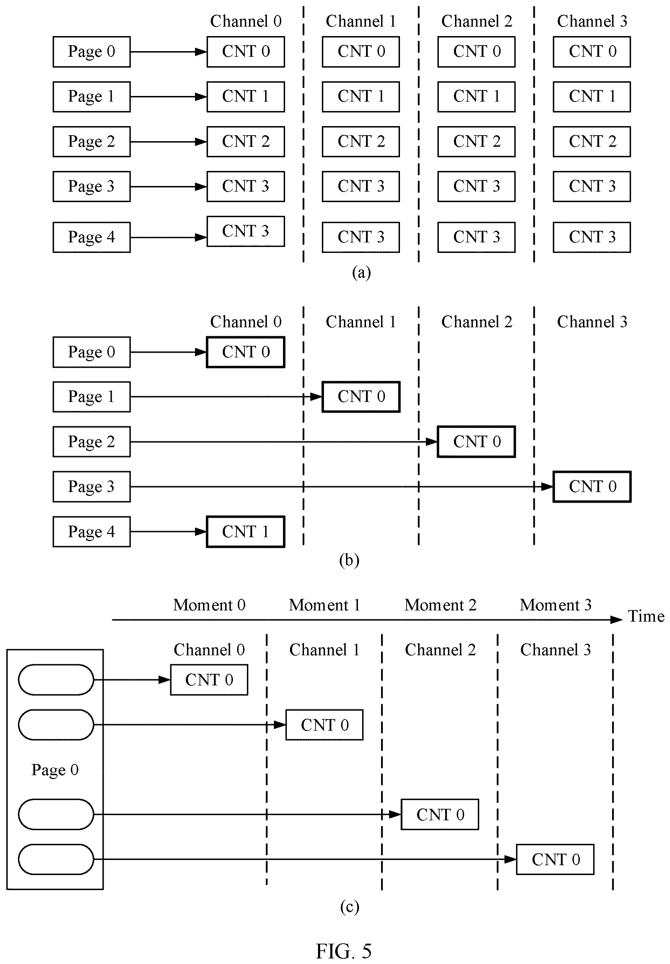

For example, as shown in (a) in FIG. 5, the processor accesses four memory media in a 4-way (4-way) interleaving manner, in other words, accessed data in the memories is evenly distributed to four memory channels based on unit storage space, including a memory channel 0 to a memory channel 3. Each memory channel includes storage space of address segments of five pages. If access frequencies of five pages are counted in each memory channel, for each page, a counter needs to be deployed on each of the four memory channels.

As shown in (b) in FIG. 5, it is assumed that the correspondence between a page identifier and a memory channel indicates that there is a correspondence with a memory channel that has a same modulo-4 operation result as a page identifier, in other words, statistics on access frequencies of interleaved data blocks in a page are collected in the memory channel that has the same modulo-4 operation result as the page identifier. A page 0 corresponds to a memory channel 0, and statistics on access frequencies of interleaved data blocks in the page 0 are collected in the memory channel 0. A page 1 corresponds to a memory channel 1, and statistics on access frequencies of interleaved data blocks in the page 1 are collected in the memory channel 1. By analogy, a page 4 corresponds to the memory channel 0, and statistics on access frequencies of interleaved data blocks in the page 4 are collected in the memory channel 0.

In some other embodiments, when statistics on the access frequencies of the interleaved data blocks in the sampled memory channels are collected, some access frequency characteristics are lost. In this case, the access frequencies of the interleaved data blocks in the sampled memory channels are not likely to completely represent access frequencies of pages. The memory samples the plurality of memory channels in a rotational sampling manner indicated by the sampling strategy, to obtain the sampled memory channels. The rotational sampling manner indicates a change manner of the correspondence between a page identifier and a memory channel.

For example, the rotational sampling manner is based on correspondences between page identifiers and memory channels at different moments. As shown in (c) in FIG. 5, at a moment 0, a page 0 corresponds to a memory channel 0, and statistics on access frequencies of interleaved data blocks in the page 0 are collected in the memory channel 0; at a moment 1, the page 0 corresponds to a memory channel 1, and statistics on access frequencies of interleaved data blocks in the page 0 are collected in the memory channel 1; at a moment 2, the page 0 corresponds to a memory channel 2, and statistics on access frequencies of interleaved data blocks in the page 0 are collected in the memory channel 2; and at a moment 3, the page 0 corresponds to a memory channel 3, and statistics on access frequencies of interleaved data blocks in the page 0 are collected in the memory channel 3.

Manner 2: The memory samples the plurality of memory channels based on a correspondence between a time period indicated by the sampling strategy and storage space of the memory, to obtain the sampled memory channels. It may be understood that storage space of the memory medium is divided into a plurality of parts, and the plurality of parts correspond to a plurality of time periods. The memory medium receives the access request, and determines whether a page accessed by the processor and an address segment indicated by a physical address in the page belong to a part, of the space, corresponding to the time period. If the page and the address segment belong to the part of the space, the memory medium collects statistics on an access frequency of the address segment in the page. If the page and the address segment do not belong to the part of the space, the memory medium does not need to collect statistics on an access frequency of the address segment in the page.

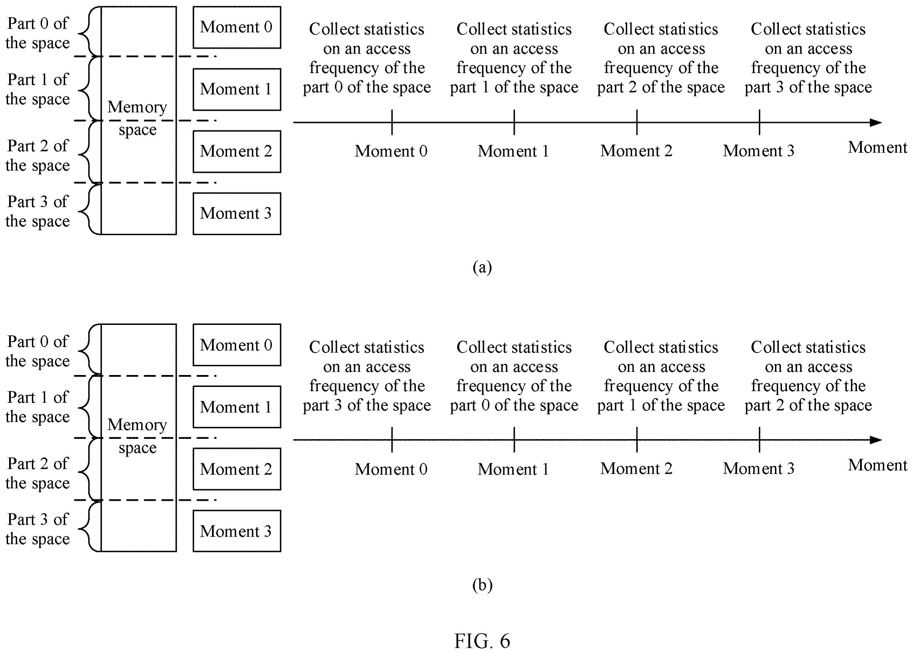

For example, as shown in (a) in FIG. 6, at a moment 0, statistics are collected on a part 0 of the space; at a moment 1, statistics are collected on a part 1 of the space; at a moment 2, statistics are collected on a part 2 of the space; and at a moment 3, statistics are collected on a part 3 of the space. It is assumed that the memory medium receives the access request at the moment 0, and it is determined that the page accessed by the processor and the address segment indicated by the physical address in the page belong to the part 0 of the space. In this case, the memory medium collects statistics on an access frequency of the address segment in the page. If the memory medium determines that the page accessed by the processor and the address segment indicated by the physical address in the page belong to the part 1 of the space, the memory medium does not need to collect statistics on the access frequency of the address segment in the page.

In some other embodiments, when sampling is performed based on a time dimension, some frequency characteristics are lost. As a result, the access frequencies of the interleaved data blocks in the sampled memory channels are not likely to completely represent access frequencies of pages. The memory medium samples the plurality of memory channels in the rotational sampling manner indicated by the sampling strategy, to obtain the sampled memory channels. The rotational sampling manner indicates a change manner of the correspondence between the time period and the storage space of the memory medium, that is, change of a sampling time sequence in different storage space.

For example, the rotational sampling manner is based on correspondences between different time periods and the storage space of the memory medium. (b) in FIG. 6 is different from (a) in FIG. 6 as follows: In a second period, a part, of the space, corresponding to each moment is changed. For example, at a moment 0, statistics are collected on a part 3 of the space; at a moment 1, statistics are collected on a part 0 of the space; at a moment 2, statistics are collected on a part 1 of the space; and at a moment 3, statistics are collected on a part 2 of the space. It is assumed that the memory medium receives the access request at the moment 0, and it is determined that the page accessed by the processor and the address segment indicated by the physical address in the page belong to the part 3 of the space. In this case, the memory medium collects statistics on an access frequency of the address segment in the page.

A change manner of the rotational sampling manner based on a space dimension and a time dimension is not limited in this application. When the memory channels are sampled based on a space dimension and a time dimension, the rotational sampling manner increases more possibilities of the correspondence, making the access frequencies of the interleaved data blocks in the sampled memory channels more representative, and reducing distortion impact caused by sampling.

It should be noted that, when the processor accesses the plurality of memory media in the interleaving manner, according to the method for migrating memory data provided in this application, each memory medium may sample the memory channels, collect statistics on the access frequencies of the interleaved data blocks in the sampled memory channels, and trigger data migration between at least two memory media of different types based on access temperatures of pages determined based on the access frequencies of the pages in which the interleaved data blocks are located. In addition, an RCD in the memory medium may collect statistics on the access temperatures of the memory provided in this application. The memory medium may sample the plurality of memory channels according to the sampling strategy each time after receiving the access request; or may sample the plurality of memory channels according to the sampling strategy after receiving a plurality of access requests based on a sampling period.

In this way, the memory channels are sampled based on a space dimension and a time dimension, so that an access frequency of a smaller page can be finally obtained in a case in which fewer counters are used (less RAM storage resources are needed to store the access frequency). In addition, the rotational sampling manner compensates for a partial distortion effect caused by sampling.

For example, if a storage capacity of the memory medium is 128 GB and a page size is 4 KB, only 128M counters are needed in the presence of interleaving in four memory channels.

**Step 430: The processor determines, based on the access frequencies of the interleaved data blocks fed back by the memory media, the access frequencies of the pages in which the interleaved data blocks are located in the memory media.**

The access frequencies of the interleaved data blocks fed back by the memory media are the access frequencies of the interleaved data blocks in the sampled memory channels, namely, access frequencies of some storage space in the page. When the processor accesses the plurality of memory media in the interleaving manner, access frequencies of storage space of the plurality of memory media are similar. Therefore, the processor determines, based on the access frequencies of the interleaved data blocks and a quantity of interleaving channels, the access frequencies of the pages in which the interleaved data blocks are located in the memory media.

For example, the processor accesses four memory media in a four-way interleaving manner, and an access frequency, of a page in which interleaved data blocks are located, as counted in one of the memory media, is 10,000 times. In this case, an access frequency of pages in which interleaved data blocks are located is approximately 40,000 times.

**Step 440: The processor determines the access temperatures of the pages based on the access frequencies, and triggers data migration.**

The processor determines the access temperatures of the pages based on the access frequencies of the pages in which the interleaved data blocks are located, and triggers data migration. For example, if the access frequencies are greater than or equal to a threshold, it is determined that coldness or hotness of the data block is hot; or if the access frequencies are less than a threshold, it is determined that coldness or hotness of the data block is cold. When data migration is triggered based on the access temperatures of the pages, hot data may be migrated to a near memory, and cold data may be migrated to a far memory.

Optionally, a sequence of the steps in the foregoing embodiment is not limited in this application, and the sequence of the steps may be adjusted. For example, the memory medium determines the access temperatures of the pages based on the access frequencies of the interleaved data blocks, feeds back the access temperatures of the pages to the processor, and the processor triggers data migration based on the fed-back access temperatures of the pages. Alternatively, the memory medium feeds back the access frequencies of the interleaved data blocks to the processor, and the processor determines the access temperatures of the pages based on the access frequencies of the pages in which the interleaved data blocks are located, and then triggers data migration based on the access temperatures of the pages.

Multi-dimensional sampling is performed on the memory channels based on a space dimension and a time dimension that are indicated by the sampling strategy, to ensure that the access frequencies of the interleaved data blocks in the sampled memory channels are representative, and the access frequencies of the pages in which the interleaved data blocks are located are determined based on the access frequencies of the interleaved data blocks in the sampled memory channels, that is, all access frequencies of the pages are determined based on some access frequencies of the pages. This improves accuracy of the access frequencies of the pages in which the interleaved data blocks are located, and reduces an amount of statistical data of the access frequencies of the pages, so that the processor can obtain the access frequencies of the pages as quickly as possible. When data migration is triggered based on the access temperatures of the pages, hot data may be migrated to a near memory, and cold data may be migrated to a far memory, so that the processor can obtain frequently accessed data from the near memory as quickly as possible, to improve the data processing speed of the system, reduce the data processing delay, and significantly improves access performance of the system.

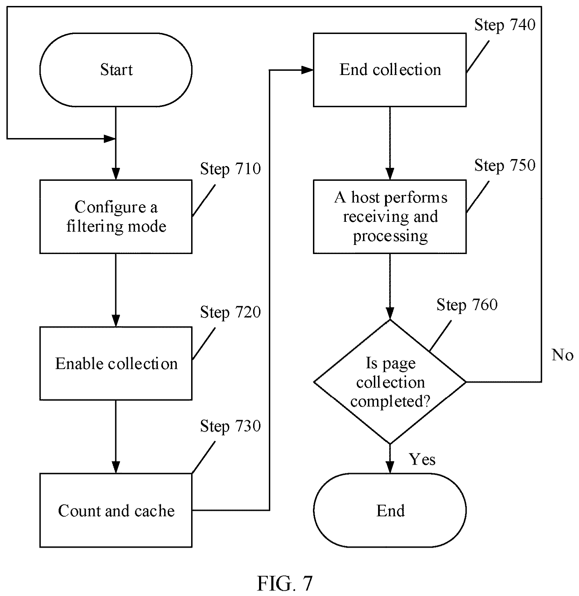

FIG. 7 is a schematic flowchart of a method for collecting statistics on access temperatures of memories according to this application. A processor receives a configuration operation indicated by a user on an interface, and configures a filtering mode in a sampling and filtering module, that is, configures a sampling strategy (step 710). The processor enables the sampling and filtering module, collects access requests, and performs a sampling operation (step 720). A counting module distributes, to corresponding counters, addresses sampled by the sampling and filtering module, and performs counting operations. All count values are stored in a RAM (step 730). After a sampling period, the processor sends a sampling stop instruction to stop counting, and all count values are stored in the RAM (step 740). The processor reads all the count values in the RAM, and stores the count values in memory space (step 750). The processor determines whether all pages are completely collected (step 760). If not all pages are completely collected, step 710 is performed to continue the sampling operation. If all pages are completely collected, the procedure ends. For a specific sampling process, refer to descriptions in the foregoing embodiment. Details are not described again.

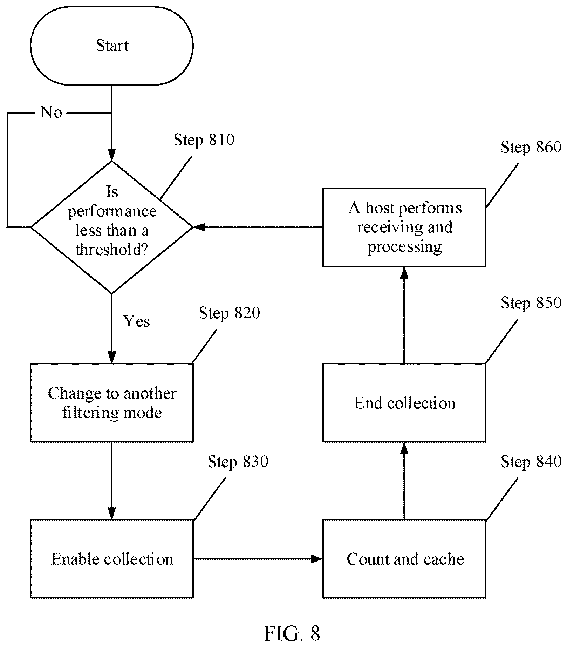

FIG. 8 is a schematic flowchart of a sampling strategy adjustment method according to this application. A processor determines whether access performance of a memory is less than a threshold (step 810). If the access performance of the memory is less than a threshold, a sampling and filtering mode is changed (step 820). For example, a sampling strategy is changed. Specifically, sampling memory channels based on a space dimension is changed to sampling memory channels based on a time dimension, or a plurality of memory channels are sampled in a rotational sampling manner. If the access performance of the memory is greater than or equal to a threshold, a sampling operation continues to be performed. The access performance of the memory includes a data processing speed and a data processing delay present when the processor accesses the memory. For the memory channel sampling method described in step 830 to step 860, refer to descriptions of step 720 to step 750.

It should be noted that, for a scenario of collecting statistics on an access temperature of a memory of a hardware module shown in (b) in FIG. 3 and a scenario of collecting statistics on an access temperature in a processor shown in (c) in FIG. 3, a data processing process is similar to a processing process in (a) in FIG. 3. For brevity, only the scenario shown in (a) in FIG. 3 is used as an example for description herein. A data processing process in another scenario is similar to the data processing process shown in FIG. 3, and details are not described herein again.

It may be understood that, to implement functions in the foregoing embodiment, the processor includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

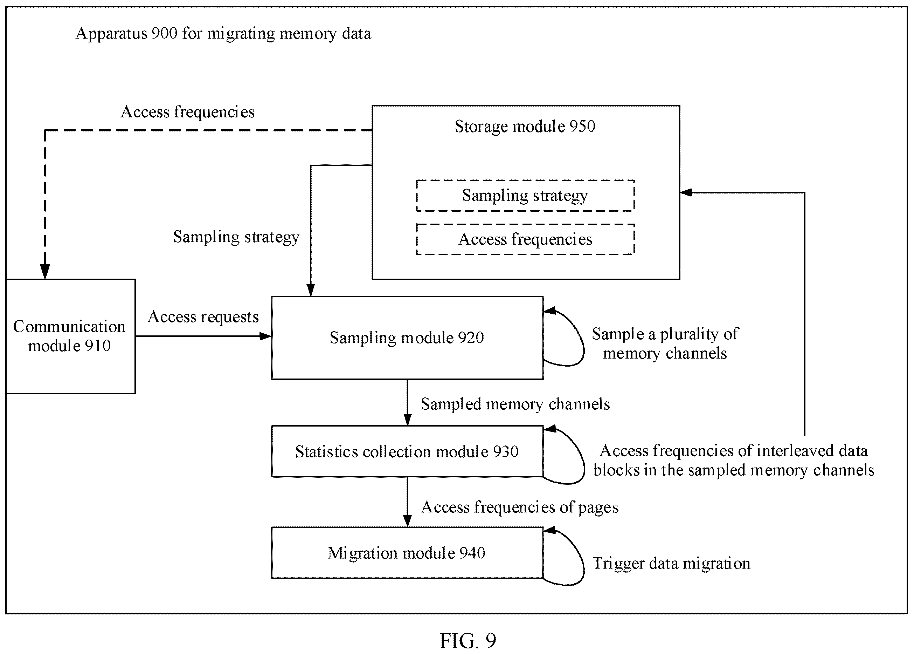

The foregoing describes in detail the method for migrating memory data according to this embodiment with reference to FIG. 1 to FIG. 8, and the following describes an apparatus for migrating memory data according to this embodiment with reference to FIG. 9.

FIG. 9 is a diagram of a possible structure of an apparatus for migrating memory data according to an embodiment. The apparatus for migrating memory data may be configured to implement functions of the memory medium in the foregoing method embodiments, and therefore can also implement beneficial effects of the foregoing method embodiments. In this embodiment, the apparatus for migrating memory data may be the first memory medium shown in FIG. 4, or may be a module (for example, a chip) used in a processor.

As shown in FIG. 9, the apparatus 900 for migrating memory data includes a communication module 910, a sampling module 920, a statistics collection module 930, a migration module 940, and a storage module 950. The apparatus 900 for migrating memory data is configured to implement functions of the memory and the processor in the method embodiment shown in FIG. 4.

The communication module 910 is configured to obtain access requests, where the access request indicates an operation performed by an application run by a processor in a computer device on a memory medium. For example, the communication module 910 is configured to perform step 410 in FIG. 4.

The sampling module 920 is configured to sample a plurality of memory channels in the computer device according to a sampling strategy, where the sampling strategy indicates a rule for sampling memory channels based on a space dimension and a time dimension. For example, the sampling module 920 is configured to perform step 420 in FIG. 4.

The statistics collection module 930 is configured to determine access frequencies of interleaved data blocks in sampled memory channels. For example, the statistics collection module 930 is configured to perform step 420 in FIG. 4.

The statistics collection module 930 is further configured to determine, based on the access frequencies of the interleaved data blocks, access frequencies of pages in which the interleaved data blocks are located in memory media, where the access frequencies of the pages in which the interleaved data blocks are located are used to determine access temperatures of the pages. For example, the statistics collection module 930 is configured to perform step 430 in FIG. 4.

The migration module 940 is configured to trigger data migration between at least two memory media of different types based on the access temperatures. For example, the migration module 940 is configured to perform step 440 in FIG. 4.

Optionally, the sampling module 920 is specifically configured to sample the plurality of memory channels based on page identifiers indicated by the sampling strategy and spatial distribution of the memory channels, to obtain the sampled memory channels.

Optionally, the sampling module 920 is specifically configured to sample the plurality of memory channels based on a correspondence between a time period indicated by the sampling strategy and storage space of the memory medium, to obtain the sampled memory channels.

Optionally, the sampling module 920 is specifically configured to sample the plurality of memory channels in a rotational sampling manner indicated by the sampling strategy, to obtain the sampled memory channels, where the rotational sampling manner indicates a change manner of a correspondence between a page identifier and a memory channel.

Optionally, the sampling module 920 is specifically configured to sample the plurality of memory channels in a rotational sampling manner indicated by the sampling strategy, to obtain the sampled memory channels, where the rotational sampling manner indicates a change manner of the correspondence between the time period and the storage space of the memory medium.

The storage module 950 is configured to store the sampling strategy and the access frequencies, so that the sampling module 920 samples the plurality of memory channels when the processor in the computer device accesses the memory media in an interleaving manner.

It should be understood that the apparatus 900 for migrating memory data in this embodiment of this application may be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), generic array logic (generic array logic, GAL), or any combination thereof. When data migration between the memories shown in FIG. 4 may also be implemented by using software, various modules may also be software modules, and the apparatus 900 for migrating memory data and the modules thereof may also be software modules.

The apparatus 900 for migrating memory data according to this embodiment of this application may correspondingly perform the method described in embodiments of this application, and the foregoing and other operations and/or functions of the units in the apparatus 900 for migrating memory data are separately intended to implement corresponding procedures of the method in FIG. 4. For brevity, details are not described herein again.

This application further provides a processor. The processor includes a storage and at least two processor cores. The processor is associated with at least two memory media of different types. The storage is configured to store a group of computer instructions. When executing the group of computer instructions, the processor core performs operation steps of the methods in the foregoing embodiments, to identify an access frequency at which a data block in the memory medium is accessed by an application.

This application further provides a chip, including a processor and a power supply circuit, where the power supply circuit is configured to supply power to the processor, and the processor is configured to perform an operation step of the method in the foregoing embodiments, to identify an access frequency at which a data block in a memory is accessed by an application.

This application further provides a computer system. The computer system includes a plurality of computer devices, and the computer device is configured to perform operation steps of the methods in the foregoing embodiments.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computer device. Certainly, the processor and the storage medium may alternatively exist in the computer device as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A method for migrating memory data, wherein a hybrid memory system comprises a plurality of processors and a plurality of memory media of different types, and the processor is associated with at least two memory media of different types; and the method comprises:
sampling a plurality of memory channels in a computer device according to a sampling strategy, and determining access frequencies of interleaved data blocks in sampled memory channels, wherein the plurality of memory channels allow a processor in the computer device to access the memory media in an interleaving manner, and the sampling strategy indicates a rule for sampling memory channels based on a space dimension and a time dimension;
determining, based on the access frequencies of the interleaved data blocks, access frequencies of pages in which the interleaved data blocks are located in the memory media, wherein the access frequencies of the pages in which the interleaved data blocks are located are used to determine access temperatures of the pages; and
triggering data migration between the at least two memory media of different types based on the access temperatures.

2. The method according to claim 1, wherein sampling the plurality of memory channels in the computer device according to the sampling strategy comprises:
sampling the plurality of memory channels based on page identifiers indicated by the sampling strategy and spatial distribution of the memory channels, to obtain the sampled memory channels.

3. The method according to claim 2, wherein sampling the plurality of memory channels based on the page identifiers indicated by the sampling strategy and the spatial distribution of the memory channels, to obtain the sampled memory channels comprises:
sampling the plurality of memory channels based on a correspondence between the page identifiers and the memory channels, to obtain the sampled memory channels.

4. The method according to any one of claims 1 to 3, wherein sampling the plurality of memory channels in the computer device according to the sampling strategy comprises:
sampling the plurality of memory channels in a rotational sampling manner indicated by the sampling strategy, to obtain the sampled memory channels, wherein the rotational sampling manner indicates a change manner of a correspondence between a page identifier and a memory channel.

5. The method according to any one of claims 1 to 3, wherein sampling the plurality of memory channels in the computer device according to the sampling strategy comprises:
sampling the plurality of memory channels based on a correspondence between a time period indicated by the sampling strategy and storage space of the memory medium, to obtain the sampled memory channels.

6. The method according to claim 5, wherein sampling the plurality of memory channels in the computer device according to the sampling strategy comprises:
sampling the plurality of memory channels in a rotational sampling manner indicated by the sampling strategy, to obtain the sampled memory channels, wherein the rotational sampling manner indicates a change manner of the correspondence between the time period and the storage space of the memory medium.

7. The method according to any one of claims 1 to 6, wherein sampling the plurality of memory channels in the computer device according to the sampling strategy comprises:
sampling, according to the sampling strategy, a plurality of memory channels corresponding to addresses indicated by access requests, wherein the access request indicates an operation performed by an application run by the processor in the computer device on the memory medium.

8. The method according to any one of claims 1 to 7, wherein a size of the interleaved data block is a multiple of a size of a cache line of accessing the memory medium by the processor.

9. The method according to any one of claims 1 to 8, wherein the plurality of memory media of different types comprise a first memory medium and a second memory medium, the memory media associated with the processor comprise the first memory medium and the second memory medium, an access speed of the first memory medium is greater than an access speed of the second memory medium, and an access delay of the first memory medium is less than an access delay of the second memory medium.

10. An apparatus for migrating memory data, comprising:
a sampling module, configured to sample a plurality of memory channels in a computer device according to a sampling strategy, wherein the plurality of memory channels allow a processor in the computer device to access memory media in an interleaving manner, and the sampling strategy indicates a rule for sampling memory channels based on a space dimension and a time dimension;
a statistics collection module, configured to determine access frequencies of interleaved data blocks in sampled memory channels, wherein
the statistics collection module is further configured to determine, based on the access frequencies of the interleaved data blocks, access frequencies of pages in which the interleaved data blocks are located in the memory media, wherein the access frequencies of the pages in which the interleaved data blocks are located are used to determine access temperatures of the pages; and
a migration module, configured to trigger data migration between at least two memory media of different types based on the access temperatures.

11. The apparatus according to claim 10, wherein when sampling the plurality of memory channels in the computer device according to the sampling strategy, the sampling module is specifically configured to:
sample the plurality of memory channels based on page identifiers indicated by the sampling strategy and spatial distribution of the memory channels, to obtain the sampled memory channels.

12. The apparatus according to claim 11, wherein when sampling the plurality of memory channels based on the page identifiers indicated by the sampling strategy and the spatial distribution of the memory channels, to obtain the sampled memory channels, the sampling module is specifically configured to:
sample the plurality of memory channels based on a correspondence between the page identifiers and the memory channels, to obtain the sampled memory channels.

13. The apparatus according to any one of claims 10 to 12, wherein when sampling the plurality of memory channels in the computer device according to the sampling strategy, the sampling module is specifically configured to:
sample the plurality of memory channels in a rotational sampling manner indicated by the sampling strategy, to obtain the sampled memory channels, wherein the rotational sampling manner indicates a change manner of a correspondence between a page identifier and a memory channel.

14. The apparatus according to any one of claims 10 to 12, wherein when sampling the plurality of memory channels in the computer device according to the sampling strategy, the sampling module is specifically configured to:
sample the plurality of memory channels based on a correspondence between a time period indicated by the sampling strategy and storage space of the memory medium, to obtain the sampled memory channels.

15. The apparatus according to claim 14, wherein when sampling the plurality of memory channels in the computer device according to the sampling strategy, the sampling module is specifically configured to:
sample the plurality of memory channels in a rotational sampling manner indicated by the sampling strategy, to obtain the sampled memory channels, wherein the rotational sampling manner indicates a change manner of the correspondence between the time period and the storage space of the memory medium.

16. The apparatus according to any one of claims 10 to 15, wherein when sampling the plurality of memory channels in the computer device according to the sampling strategy, the sampling module is specifically configured to:
sample, according to the sampling strategy, a plurality of memory channels corresponding to addresses indicated by access requests, wherein the access request indicates an operation performed by an application run by the processor in the computer device on the memory medium.

17. The apparatus according to any one of claims 10 to 16, wherein a size of the interleaved data block is a multiple of a size of a cache line of accessing the memory medium by the processor.

18. The apparatus according to any one of claims 10 to 17, wherein a plurality of memory media of different types comprise a first memory medium and a second memory medium, memory media associated with the processor comprise the first memory medium and the second memory medium, an access speed of the first memory medium is greater than an access speed of the second memory medium, and an access delay of the first memory medium is less than an access delay of the second memory medium.

19. A memory, wherein the memory comprises a storage medium and a controller, and the storage medium is configured to store a group of computer instructions; and when executing the group of computer instructions, the controller performs an operation step of the method according to any one of claims 1 to 9, to identify an access frequency at which a data block in the memory is accessed by an application.

20. A chip, comprising a processor and a power supply circuit, wherein the power supply circuit is configured to supply power to the processor; and the processor is configured to perform an operation step of the method according to any one of claims 1 to 9, to identify an access frequency at which a data block in a memory is accessed by an application.

21. A processor, wherein the processor is associated with at least two memory media of different types, and the processor is configured to perform an operation step of the method according to any one of claims 1 to 9, to identify an access frequency at which a data block in the memory media is accessed by an application.

22. A computer device, wherein the computer device comprises a storage, a processor, and a plurality of memory media of different types, the processor is associated with at least two memory media of different types, the storage is configured to store a group of computer instructions, and when executing the group of computer instructions, the processor performs an operation step of the method according to any one of claims 1 to 9, to identify an access frequency at which a data block in the memory media is accessed by an application.

23. A computer-readable storage medium, wherein the computer-readable storage medium comprises instructions, and when the instructions are run on a computer, the computer is caused to perform the method according to any one of claims 1 to 9.
